# FASCICULE DE BREVET EUROPEEN

(11) **EP 3 724 481 B1**
(45) Date de publication et mention de la délivrance du brevet: **01.12.2021**
(21) Numéro de dépôt: 18833931.1
(22) Date de dépôt: 13.12.2018
(51) Int. Cl.: F02K 1/72, B64D 29/06

(54) **ENSEMBLE PROPULSIF POUR AÉRONEF COMPORTANT UN CAISSON D'ASSEMBLAGE SIX HEURES**
ANTRIEBSEINHEIT FÜR EIN FLUGZEUG MIT EINEM MONTAGEBOXARTIGEM AUFBAU IN DER SECHS-UHR-STELLUNG
PROPULSION UNIT FOR AIRCRAFT COMPRISING AN ASSEMBLY BOX-TYPE STRUCTURE IN THE SIX O'CLOCK POSITION

(30) Priorité: 13.12.2017 FR 1762052
(43) Date de publication de la demande: 21.10.2020
(73) Titulaire: Safran Nacelles, 76700 Gonfreville-l'Orcher (FR)
(72) Inventeur: BOILEAU, Patrick, 76700 Gonfreville L'orcher (FR)
(74) Mandataire: Germain Maureau
(86) Numéro de dépôt international: PCT/FR2018/053271
(87) Numéro de publication internationale: WO 2019/115960

(56) Documents cités:
- WO-A1-2013/038093
- WO-A1-2016/116709
- FR-A1- 2 920 131
- US-A1- 2017 008 634

## Description

La présente invention se rapporte à un ensemble propulsif pour aéronef. Le document WO2013038093A1 décrit un ensemble propulsif selon l'art antérieur.

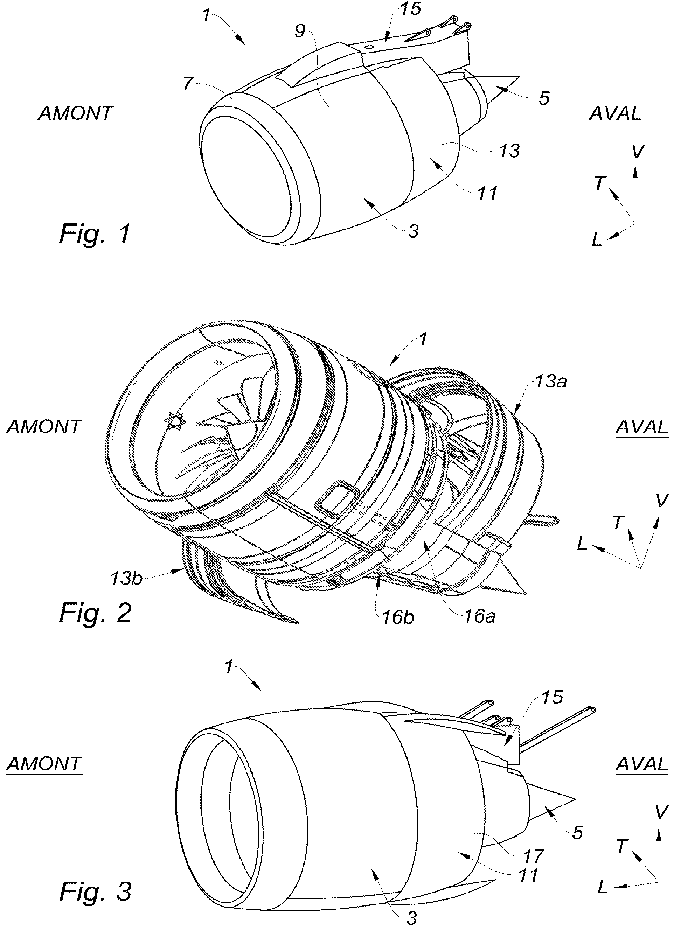

Un aéronef est mû par plusieurs ensembles propulsifs comprenant chacun un turboréacteur logé dans une nacelle. On se réfère à la figure 1 illustrant un ensemble propulsif 1 de l'art antérieur. Un ensemble propulsif 1 comprend une nacelle 3 et un turboréacteur 5 par exemple du type double flux, apte à générer, par l'intermédiaire des aubes de la soufflante en rotation, un flux de gaz chauds (également dénommé flux primaire) et un flux d'air froid (également dénommé flux secondaire) qui circule à l'extérieur du turboréacteur à travers un passage annulaire, également appelé veine, formé entre deux parois concentriques de la nacelle. Les flux primaire et secondaire sont éjectés du turboréacteur par l'arrière de la nacelle.

La nacelle 3 présente généralement une structure tubulaire comprenant une section amont, ou entrée d'air 7, située en amont du turboréacteur 5, une section médiane 9 destinée à entourer une soufflante du turboréacteur, une section aval 11, destinée à entourer la chambre de combustion du turboréacteur, embarquant des moyens d'inversion de poussée, et peut être terminée par une tuyère d'éjection située en aval du turboréacteur.

La section aval 11 présente généralement une structure externe comportant un capot externe 13, qui définit, avec une structure interne concentrique (non visible à la figure 1), dite « Inner Fixed Structure » (IFS), la veine annulaire servant à canaliser le flux d'air froid.

La structure interne définit une partie interne de la veine annulaire, et comporte généralement deux demi-coquilles reliées entre elles « à six heures » par l'intermédiaire d'un dispositif de verrouillage.

Généralement, la nacelle 3 est reliée par l'intermédiaire d'un pylône de suspension 15 encore appelé mât réacteur, à l'aile de l'avion (non représentée).

Les moyens d'inversion de poussée permettent, lors de l'atterrissage d'un avion, d'améliorer la capacité de freinage de celui-ci en redirigeant vers l'avant une fraction majoritaire de la poussée engendrée par le turboréacteur.

Dans cette phase, l'inverseur obstrue généralement la veine du flux froid et dirige ce dernier vers l'avant de la nacelle, engendrant de ce fait une contre-poussée qui vient s'ajouter au freinage des roues de l'avion. Les moyens mis en œuvre pour réaliser cette réorientation du flux froid varient suivant le type d'inverseur.

Une configuration courante est celle des inverseurs de poussée dits « à grilles ».

Dans ce type d'inverseur de poussée, le capot externe 13 de la section aval est coulissant. La translation vers l'aval de ce capot coulissant permet de découvrir des grilles d'inversion mettant en communication la veine de flux froid et l'extérieur de la nacelle.

La translation du capot externe 13 permet en outre de déployer des volets de blocage dans la veine de flux froid. Ainsi, par l'action combinée des volets de blocage et des grilles d'inversion, le flux froid est redirigé vers l'avant de la nacelle.

Comme évoqué plus haut, les moyens d'inversion de poussée sont logés dans la section aval d'une nacelle. On connait principalement trois types de configuration structurelle pour la section aval, à savoir les structures respectivement dites « en C » (ou, en anglais, « C-duct »), « en D » (ou, en anglais, « D-duct ») et en « O » (ou, en anglais, « O-duct »).

Dans la suite de la description, l'expression « nacelle à structure en D » définit, pour une meilleure lecture, une « nacelle dont la section aval est à structure en D ». Il en va de même pour une « nacelle à structure en C » ou une « nacelle à structure en O ». De même, l'expression une « structure en D » définit la configuration structurelle de la section aval de la nacelle. Il en va de même pour une « structure en C » ou une « structure en O ».

Une nacelle à structure en O (non représentée aux figures) comporte un capot externe annulaire monobloc, tandis qu'une structure en C présente deux demi-capots externes 13a, 13b, visibles à la figure 2 illustrant un ensemble propulsif 1 en cours d'ouverture pour maintenance.

Dans une structure en O ou en C, le capot externe annulaire monobloc ou les demi-capots externes sont montés en translation sur des rails disposés de part et d'autre du pylône de suspension de l'ensemble propulsif. Le capotage externe, défini par le capot externe annulaire monobloc d'une structure en O ou par les demi-capots externes d'une structure en C est guidé au niveau de ses rails montés à douze heures dans la nacelle.

Pour accéder au turboréacteur d'une nacelle à structure en C, on déverrouille dans un premier temps les deux demi-capots 13a, 13b initialement verrouillés entre eux à six heures lorsque la nacelle est en fonctionnement, puis on ouvre dans un deuxième temps ces capots « en papillon » autour d'un axe sensiblement confondu avec l'axe longitudinal du pylône, puis on déverrouille dans un troisième temps les deux demi-coquilles 16a, 16b formant la structure interne de la section aval, puis on ouvre dans un quatrième temps les deux demi-coquilles 16a, 16b « en papillon », autour d'un axe parallèle à l'axe longitudinal de la nacelle.

Pour accéder au turboréacteur d'une nacelle à structure en O, on coulisse dans un premier temps le capot externe annulaire monobloc vers l'aval de la nacelle puis, dans un deuxième temps, on déverrouille les deux demi-coquilles formant la structure interne de la section aval puis, dans un troisième temps, on ouvre les deux demi-coquilles « en papillon », autour d'un axe parallèle à l'axe longitudinal de la nacelle.

On comprend qu'un inconvénient majeur des structures en C ou en O est que le temps nécessaire pour accéder au turboréacteur pour effectuer des opérations de maintenance est important. De même, le nombre d'étapes nécessaires pour accéder au turboréacteur est également élevé.

Une solution connue de l'art antérieur est d'utiliser des nacelles à section aval à structure en D.

On a illustré à la figure 3 un ensemble propulsif 1 comprenant une nacelle 3 dont la section aval 11 est à structure 17 en D.

Dans une nacelle à structure en D, les structures interne et externe de la section aval de la nacelle sont solidaires l'une de l'autre, par l'intermédiaire de deux ilots de liaisons dénommés bifurcations. Les bifurcations sont disposées respectivement selon les positions dites « à douze heures » (bifurcation supérieure) et « à six heures » (bifurcation inférieure).

Une structure en D comporte deux demi-structures en D, reliées entre elles à six heures au niveau de la bifurcation, et montées pivotantes autour d'un axe sensiblement confondu avec l'axe longitudinal du pylône 15.

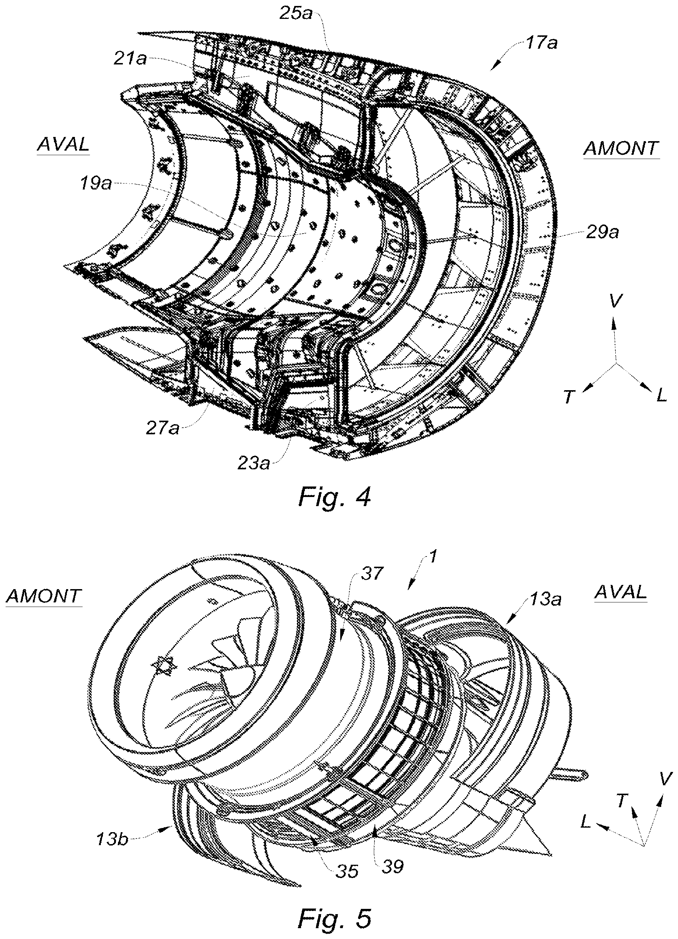

On se réfère à la figure 4 à laquelle est représentée une demi-structure 17a en D de la nacelle à structure en D de la figure 2. La configuration de la première demi-structure 17a en D qui va être décrite est identique à une deuxième demi-structure formant la structure en D. Les éléments composant la demi-structure 17a en D et identifiés par le suffixe « a » peuvent être repris dans la suite de la description avec le suffixe « b » pour se référer à des éléments composant la demi-structure 17b en D, obtenue par symétrie de la demi-structure 17a par rapport à un plan (LV) de la nacelle.

Dans une structure en D, la demi-structure 17a en D comporte une demi-structure interne 19a, solidaire à douze heures d'une demi-bifurcation douze heures 21a et à six heures d'une demi-bifurcation six heures 23a.

Sur la demi-bifurcation douze heures 21a est montée une demi-poutre douze heures 25a, et sur la demi-bifurcation six heures 23a est montée une demi-poutre six heures 27a.

Chaque demi-poutre 25a, 27a supporte un rail de coulissement (non visible à la figure 3) d'un demi-capot externe 29a, monté en translation sur chaque demi-poutre six heures et douze heures. En terminologie anglo-saxonne, le capot externe translatant, formé par les deux demi-capots externes, est appelé « transcowl ». Ainsi, dans une structure en D, le capot externe translatant est guidé en translation au niveau de ses rails montés à six heures et à douze heures.

L'accès au turboréacteur d'une nacelle à structure en D est obtenu en déverrouillant dans un premier temps les deux demi-structures en D initialement verrouillées entre elles à six heures lorsque la nacelle est en fonctionnement, puis en ouvrant dans un deuxième temps ces demi-structures en D « en papillon » autour d'un axe sensiblement confondu avec l'axe longitudinal du pylône.

En prévoyant de rendre solidaire la demi-structure interne 19a du demi-capot externe 29a, l'ouverture en papillon des demi-structures en D permet d'accéder au turboréacteur en seulement deux temps. On réduit ainsi par rapport aux structures en C ou en O le temps d'intervention pour accéder au turboréacteur.

Dans le cas d'un inverseur de poussée à grilles, les grilles, qui assurent la redirection du flux froid, peuvent en être mobiles en translation. Le fait de prévoir des grilles translatantes dans un inverseur de poussée permet de réduire la longueur de la nacelle et par conséquent de limiter sa masse et sa traînée.

En effet, lorsque la nacelle fonctionne en jet direct, les grilles sont logées dans une enveloppe annulaire définie par l'espace annulaire compris entre le carter de soufflante du turboréacteur et le capot de soufflante de la nacelle, entourant le carter de soufflante.

Dans une telle configuration d'inverseur de poussée à grilles translatantes, un moyen de liaison est prévu entre un cadre aval supportant les grilles de déviation en leur partie aval, et le capotage externe d'inverseur (formé par un capot externe annulaire monobloc dans une structure en O, et par deux demi-capots externes dans une structure en C ou en D). Lorsque le capotage externe d'inverseur est déplacé vers l'aval de la nacelle, les grilles de déviation sont déplacées de concert avec le capot externe, grâce au moyen de liaison. Lorsque le capot externe d'inverseur a atteint sa position déployée, les grilles de déviation ne sont plus logées dans l'enveloppe annulaire mais se trouvent exposées au flux d'air secondaire circulant dans la veine. Le flux d'air secondaire, bloqué par les volets d'inversion, est alors dévié par les grilles de déviation.

Dans une nacelle à structure en C ou en O, la translation des grilles est obtenue en prévoyant au moins deux rails de guidage des grilles, disposés à douze heures le long du pylône, dans le prolongement des rails supportant le capot coulissant, et en prévoyant au moins deux rails de guidage des grilles, disposés à six heures sur le carter de soufflante et terminant en bord à bord avec l'extrémité aval du carter de soufflante. Les grilles comportent des glissières conçues pour coulisser dans les rails de guidage des grilles.

Dans une configuration avantageuse en ce qu'elle permet d'assurer une continuité du passage d'effort lorsque les grilles de déviation sont déployées, les rails six heures de guidage des grilles sont prolongés en aval du carter de soufflante.

On se réfère à la figure 5 illustrant l'ensemble propulsif 1 de la figure 2 dans lequel la nacelle est à structure en C.

On a ôté de la figure 5 le capot de soufflante de la nacelle pour une meilleure visibilité.

Des rails six heures 35 de guidage des grilles son fixés sur le carter de soufflante 37, et prolongés en aval du carter de soufflante 37. Une virole annulaire 39 est montée en aval du carter de soufflante 37 pour supporter la partie prolongée des rails six heures 35 de guidage des grilles. Selon une alternative non représentée, les rails six heures de guidage de grilles peuvent être prolongés en aval du carter de soufflante, en porte à faux. Un agencement identique de tels rails de guidage six heures peut être opéré sur une nacelle à structure en O.

Dans une nacelle à structure en D, le prolongement des rails six heures de guidage des grilles en aval du carter de soufflante n'est actuellement pas rendu possible.

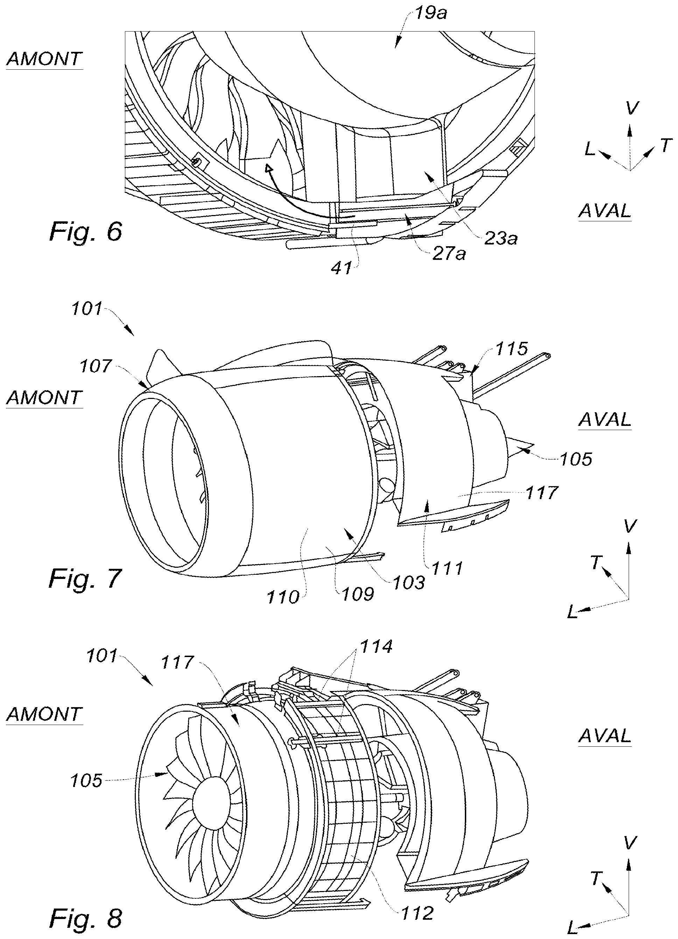

En effet, comme représenté à la figure 6 illustrant la zone six heures d'un ensemble propulsif 1 d'une nacelle à structure en D, un rail six heures 41 de guidage des grilles est monté à l'extérieur de la demi-poutre six heures 27a montée sur la demi-bifurcation six heures 23a reliant la demi-structure interne 19a. Un rail six heures de guidage des grilles est également monté à l'extérieur de la deuxième demi-poutre six heures (non visible) montée sur la deuxième demi-bifurcation six heures (non visible).

Le prolongement des rails six heures 41 de guidage des grilles en aval du carter de soufflante 37 entraîne une interférence entre les rails six heures 41 de guidage des grilles et les deux demi-poutres six heures de la nacelle, lors de l'ouverture des demi-structures en D en papillon (selon la flèche représentée à la figure 6) pour effectuer des opérations de maintenance du turboréacteur.

De même, une solution de l'art antérieur non représentée selon laquelle les rails six heures de guidage des grilles seraient montés à l'intérieur de chaque demi-poutre six heures entraînerait une interférence entre la glissière des grilles et les deux demi-poutres six heures lors du déplacement des grilles vers l'aval de la nacelle.

La présente invention vise à pallier les inconvénients de l'art antérieur, c'est-à-dire proposer une nacelle pour turboréacteur d'aéronef, à structure aval en D, comportant un inverseur de poussée à grilles mobiles dont les rails six heures de guidage des grilles se prolongent en aval du carter de soufflante du turboréacteur.

A cet effet, la présente invention concerne un ensemble propulsif pour aéronef, comprenant une nacelle supportant un turboréacteur, ladite nacelle comprenant :
- une section amont d'entrée d'air;
- une section médiane, dans le prolongement aval de ladite section amont, comprenant un capot de soufflante, l'espace annulaire compris entre le capot de soufflante et un carter de soufflante du turboréacteur définissant une enveloppe annulaire ;
- une section aval à structure en D embarquant un dispositif d'inversion de poussée, ladite section aval à structure en D comprenant des grilles de déviation mobiles entre une position rétractée selon laquelle les grilles sont logées dans ladite enveloppe annulaire de la section médiane et une position déployée selon laquelle lesdites grilles sont déplacées en aval de ladite enveloppe annulaire, ladite section aval à structure en D comportant deux demi-structures en D comprenant chacune :
   - un demi-capot externe, mobile en translation lors de l'activation de moyens d'actionnement le long d'un axe sensiblement longitudinal de l'ensemble propulsif, entre une position rétractée assurant une continuité aérodynamique avec le capot de soufflante et une veine annulaire, pour un fonctionnement de la nacelle en jet direct et une position déployée ouvrant un passage annulaire dans la nacelle pour un fonctionnement de la nacelle en jet inversé ;
   - un moyen de liaison entre les grilles de déviation et ledit demi-capot externe, agencé de sorte que les grilles déviation se déplacent de concert avec ledit demi-capot externe lors de l'activation desdits moyens d'actionnement ;
   - une demi-bifurcation six heures ;
   - une demi-structure interne définissant une partie interne de la veine annulaire de la nacelle lorsque la nacelle est en fonctionnement, ladite demi-structure interne étant reliée audit demi-capot externe par ladite demi-bifurcation six heures ;
   - une demi-poutre six heures montée sur la demi-bifurcation six heures, supportant un rail de coulissement en translation du demi-capot externe ;
   - au moins deux rails de guidage six heures des grilles de déviation, fixés sur le carter de soufflante du turboréacteur ; ledit ensemble propulsif étant remarquable en ce qu'il comporte un caisson d'assemblage, monté en porte-à-faux aval par rapport audit carter de soufflante et directement fixé audit carter de soufflante, ledit caisson d'assemblage comportant :
- au moins deux rails de guidage des grilles de déviation,
- un dispositif de verrouillage entre ledit caisson d'assemblage et chaque demi-poutre six heures de chaque demi-structure en D,
ledit caisson d'assemblage étant agencé dans l'ensemble propulsif de sorte que les rails de guidage des grilles dudit caisson d'assemblage sont situés dans le prolongement des rails de guidage six heures des grilles fixés sur le carter de soufflante, de façon à assurer une continuité entre les rails de guidage des grilles dudit caisson d'assemblage et les rails de guidage six heures des grilles fixés sur le carter de soufflante.

Ainsi, en prévoyant un caisson d'assemblage pourvu de rails de guidage des grilles situés dans le prolongement des rails de guidage six heures des grilles fixés sur le carter de soufflante, ledit caisson étant monté en porte-à-faux en aval du carter de soufflante et comportant un dispositif de verrouillage entre ledit caisson et chaque demi-poutre six heures de chaque demi-structure en D, on obtient un ensemble propulsif dont :
- la nacelle est à structure en D, ce qui permet de faciliter l'accès au turboréacteur lors d'opérations de maintenance,
- le dispositif d'inversion de poussée est à grilles translatantes, ce qui permet de réduire la longueur de la nacelle, et par conséquent de réduire la masse et la traînée de la nacelle, et
- les rails de guidage des grilles translatantes se prolongent en aval d'un bord aval du carter de soufflante, ce qui permet d'assurer une continuité du passage d'effort lorsque les grilles sont déployées.

Selon des caractéristiques optionnelles de l'ensemble propulsif de l'invention :
- le caisson d'assemblage comporte une bride de fixation annulaire, montée en amont dudit caisson d'assemblage et assurant la fixation au carter de soufflante. Cela permet au carter de soufflante de bien reprendre les efforts subis par le caisson lorsque le capotage externe est déployé ;
- le caisson d'assemblage comporte un compartiment aval en aval de la bride de fixation annulaire ;
- le compartiment aval du caisson d'assemblage comporte un espace interne creux, pour le passage de servitudes du turboréacteur. Cela permet d'assurer une bonne intégration du turboréacteur dans un tel ensemble propulsif;
- le compartiment aval du caisson d'assemblage présente une forme sensiblement parallélépipédique. Le caisson d'assemblage selon l'invention est ainsi facile à fabriquer ;
- lesdits au moins deux rails de guidage des grilles du caisson d'assemblage sont chacun intégrés à une paroi externe longitudinale du compartiment aval du caisson d'assemblage ;
- le caisson d'assemblage comporte une paroi inférieure assurant la continuité aérodynamique avec les deux demi-structures en D, ladite paroi inférieure étant conçue pour venir en contact avec un flux d'air externe s'écoulant autour de la nacelle ;
- les deux demi-structures en D sont liées entre elles au niveau d'une zone de liaison située en aval du caisson d'assemblage.
- le dispositif de verrouillage entre ledit caisson d'assemblage et chaque demi-poutre six heures de chaque demi-structure en D est positionné au niveau d'une portion amont de ladite demi-poutre, ce qui permet de verrouiller les demi-poutres six heures entre elles via le caisson d'assemblage, en complément du verrouillage direct des demi-poutres six heures réalisé au niveau de la zone de liaison en aval du caisson d'assemblage ;
- la longueur du compartiment aval du caisson d'assemblage est comprise entre 25% et 75% de la longueur de la demi-poutre six heures de la demi-structure en D ;
- le caisson d'assemblage comporte un dispositif d'étanchéité assurant l'étanchéité avec les demi-poutres six heures.

D'autres caractéristiques et avantages de l'invention apparaîtront à la lecture de la description détaillée qui suit pour la compréhension de laquelle on se reportera aux dessins annexés dans lesquels :
- la figure 1 est une vue isométrique d'un ensemble propulsif de l'art antérieur ;
- la figure 2 illustre un ensemble propulsif de l'art antérieur, en cours d'ouverture de la nacelle pour la maintenance du turboréacteur ;
- la figure 3 illustre un ensemble propulsif de l'art antérieur équipé d'une nacelle à structure en D ;
- la figure 4 représente une demi-structure en D de la nacelle à structure en D de la figure 3 ;
- la figure 5 illustre un ensemble propulsif de l'art antérieur équipé d'une nacelle à structure en C ;
- la figure 6 illustre une zone six heures d'un ensemble propulsif de l'art antérieur équipé d'une nacelle à structure en D ;
- la figure 7 illustre en vue isométrique l'ensemble propulsif de l'invention en position d'ouverture pour la maintenance du turboréacteur ;
- la figure 8 est identique à la figure 7, les sections amont et médiane de la nacelle ayant été ôtées pour une meilleure visibilité ;
- La figure 9 montre l'ensemble propulsif de la figure 7 en vue de derrière ;
- la figure 10 illustre la zone six heures de l'ensemble propulsif de l'invention en coupe longitudinale, centré sur les sections médiane et aval de la nacelle ;
- la figure 11 est une vue en coupe transversale selon la ligne XI-XI de la figure 10 ;
- la figure 12 l'ensemble propulsif de l'invention en vue isométrique de dessous ;
- la figure 13 représente la zone six heures de l'ensemble propulsif, centrée sur le caisson d'assemblage de l'invention.

Dans la description et dans les revendications, les termes « amont » et «aval » doivent s'entendre par rapport à la circulation du flux d'air à l'intérieur de l'ensemble propulsif formé par la nacelle et le turboréacteur, c'est-à-dire de la gauche vers la droite en référence à la figure 1.

De même, on utilisera à titre non limitatif les expressions « interne » et « externe » en référence à l'éloignement radial par rapport à l'axe longitudinal de la nacelle, l'expression « interne » définissant une zone radialement plus proche de l'axe longitudinal de la nacelle, par opposition à l'expression « externe ».

Par ailleurs, dans la description et les revendications, pour clarifier la description et les revendications, on adoptera à titre non limitatif la terminologie longitudinal, vertical et transversal en référence au trièdre L, V, T indiqué aux figures.

En outre, sur l'ensemble des figures, des références identiques ou analogues représentent des organes ou ensembles d'organes identiques ou analogues.

On se réfère aux figures 7 à 9, illustrant un ensemble propulsif 101 selon l'invention.

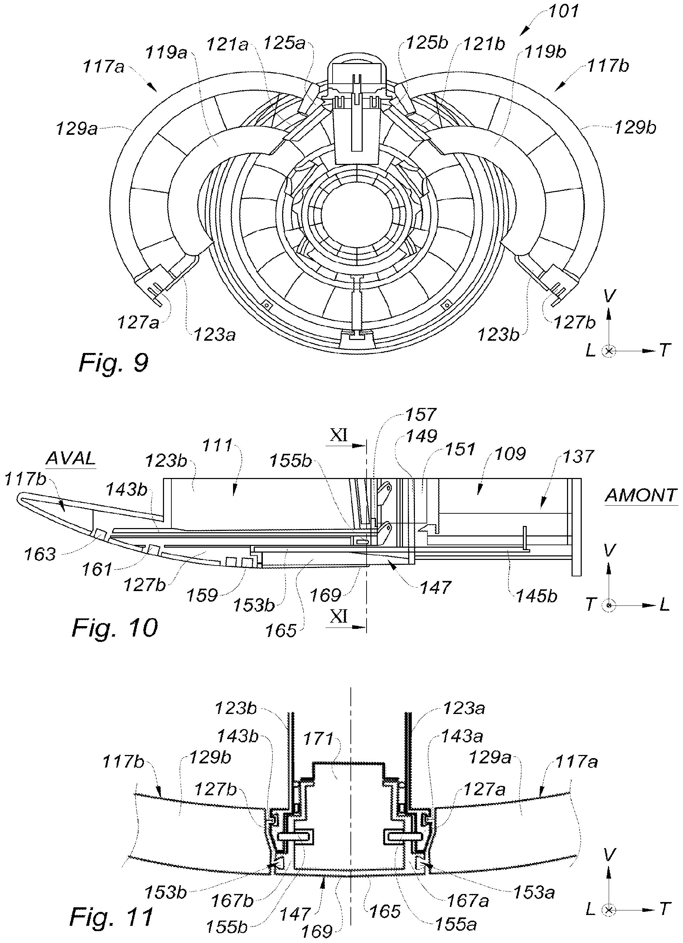

A la figure 7 est représenté l'ensemble propulsif 101 en position d'ouverture pour la maintenance du turboréacteur. La figure 8 est identique à la figure 7, les sections amont et médiane de la nacelle ayant été ôtées pour une meilleure visibilité. La figure 9 représente l'ensemble propulsif 101 en vue de derrière.

L'ensemble propulsif 101 comporte une nacelle 103 présentant une structure tubulaire et comprenant une section amont, ou entrée d'air 107, située en amont du turboréacteur 105, une section médiane 109 destinée à entourer une soufflante du turboréacteur et comportant un capot de soufflante 110, une section aval 111, destinée à entourer la chambre de combustion du turboréacteur, embarquant des moyens d'inversion de poussée, pouvant être terminée par une tuyère d'éjection située en aval du turboréacteur. La nacelle 103 est reliée par l'intermédiaire d'un pylône de suspension 115 à l'aile de l'avion (non représentée).

La section aval 111 est à structure 117 en D. La structure 117 en D comporte deux demi-structures 117a, 117b en D, comportant chacune une demi-structure interne 119a, 119b solidaire à douze heures d'une demi-bifurcation douze heures 121a, 121b et à six heures d'une demi-bifurcation six heures 123a, 123b.

Sur la demi-bifurcation douze heures 121a, 121b est montée une demi-poutre douze heures 125a, 125b et sur la demi-bifurcation six heures 123a, 123b est montée une demi-poutre six heures 127a, 127b.

Chaque demi-poutre 125a, 125b, 127a, 127b supporte un rail de coulissement (non visible aux figures 7 à 9) de deux demi-capots externes 129a, 129b montés en translation sur chaque demi-poutre six heures et douze heures.

La section aval 111 à structure 117 en D comprend des grilles de déviation (non représentées).

Les grilles de déviation sont mobiles entre une position rétractée selon laquelle les grilles sont logées dans une enveloppe annulaire 112 (visible à la figure 8) définie par l'espace annulaire compris entre le capot de soufflante 110 et le carter de soufflante 137 du turboréacteur 105 et une position déployée selon laquelle les grilles sont déplacées en aval de l'enveloppe annulaire 112.

Des moyens d'actionnement, par exemple constitués par des actionneurs 114, sont montés sur le carter de soufflante 137 et comportent une tige fixée sur les demi-capots externes 129a, 129b.

L'activation de ces moyens d'actionnement permet un déplacement des capots externes 129a, 129b, lequel déplacement entraîne de concert un déplacement en translation les grilles de déviation, reliées aux demi-capots externes par un moyen de liaison (non représenté).

En fonctionnement jet direct de la nacelle, les demi-capots 129a, 129b sont en position rétractée et assurent une continuité aérodynamique avec le capot de soufflante 110. Les grilles de déviation se trouvent en position rétractée.

Lors de l'activation des moyens d'actionnement, les demi-capots externes se translatent vers l'aval de la nacelle, jusqu'à atteindre une position déployée ouvrant dans la nacelle un passage annulaire, pour un fonctionnement de la nacelle en jet inversé. Les grilles de déviation sont déployées vers l'aval de la nacelle grâce au moyen de liaison avec les demi-capots externes, et se trouvent dans le passage annulaire ainsi défini dans la nacelle.

On se réfère aux figures 10 et 11. La figure 10 illustre la zone six heures de l'ensemble propulsif 101 en coupe longitudinale, centré sur les sections médiane 109 et aval 111 de la nacelle 103, et la figure 11 est une vue en coupe transversale de l'ensemble propulsif 101 selon la ligne XI-XI de la figure 10.

La demi-poutre six heures 127a, respectivement 127b, respectivement montée sur la demi-bifurcation six heures 123a, respectivement 123b, supporte un rail de coulissement 143a, respectivement 143b du demi-capot externe 129a, respectivement 129b.

Sur le carter de soufflante 137 sont fixés deux rails de guidage six heures 145a, 145b des grilles (seul le rail de guidage 145b est visible aux figures 10 et 11).

Selon l'invention, l'ensemble propulsif 101 comporte un caisson d'assemblage 147 monté en porte-à-faux aval par rapport au carter de soufflante 137.

Le caisson d'assemblage 147 est fixé directement sur le carter de soufflante 137, par exemple au moyen d'une bride de fixation annulaire 149 qui fait partie intégrante du caisson d'assemblage.

La bride de fixation annulaire 149 du caisson d'assemblage 147 est fixée sur un bord aval 151 du carter de soufflante 137. La bride de fixation annulaire assure le passage d'efforts entre le caisson d'assemblage 147 et le carter de soufflante 137.

Le caisson d'assemblage 147 comporte deux rails de guidage 153a, 153b des grilles de déviation. Les rails de guidage 153a, 153b des grilles montés sur le caisson d'assemblage 147 sont situés dans le prolongement des rails de guidage six heures 145a, 145b des grilles fixés sur le carter de soufflante.

Une continuité entre les rails de guidage 153a, 153b des grilles du caisson d'assemblage 147 et les rails de guidage six heures 145a, 145b des grilles fixés sur le carter de soufflante est ainsi assurée.

Un dispositif de verrouillage 155a, 155b est monté sur le caisson d'assemblage 147, entre le caisson d'assemblage et chaque demi-poutre six heures 127a, 127b de chaque demi-structure 117a, 117b en D. Cela permet de verrouiller les demi-poutres six heures entre elles via le caisson d'assemblage.

Le dispositif de verrouillage 155a, 155b est positionné au niveau d'une portion amont 157 des demi-poutres 127a, 127b.

Par ailleurs, les deux demi-structures 117a, 117b en D sont liées entre elles au niveau d'une zone de liaison située en aval du caisson d'assemblage 147, par l'intermédiaire de verrous 159, 161, 163.

Le caisson d'assemblage comporte un compartiment aval 165 en aval de la bride de fixation annulaire 149. Le compartiment aval 165 présente par exemple une forme sensiblement parallélépipédique. La longueur du compartiment aval du caisson d'assemblage est comprise entre 25% et 75% de la longueur de l'une des demi-poutres 127a, 127b de la demi-structure en D.

Les rails de guidage 153a, 153b des grilles du caisson d'assemblage sont respectivement intégrés à des parois externes longitudinales 167a, 167b du compartiment aval 165 du caisson d'assemblage 147.

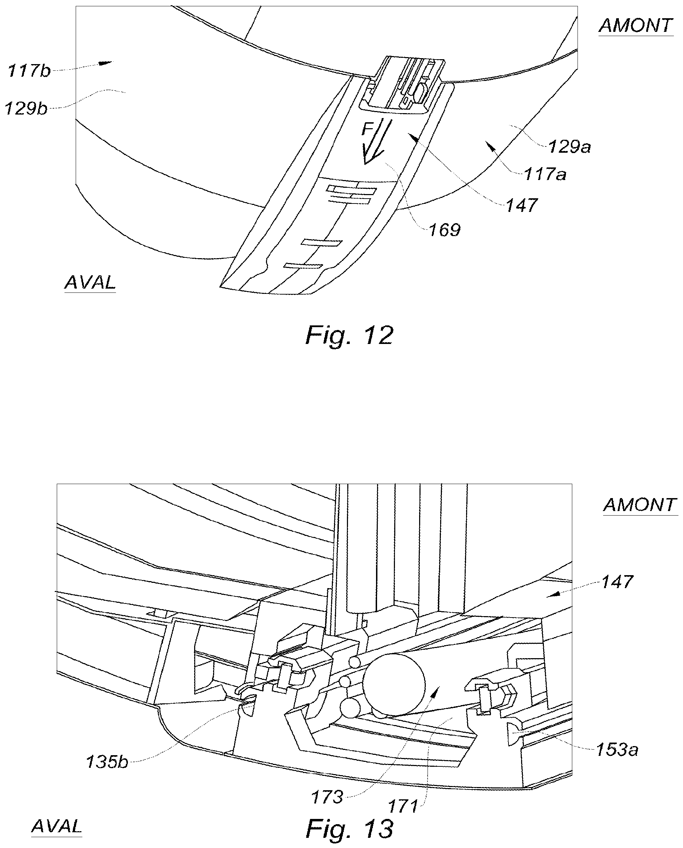

Le caisson d'assemblage 147 comporte par ailleurs une paroi inférieure 169 assurant la continuité aérodynamique avec les deux demi-structures 117a, 117b en D, et conçue pour venir en contact avec le flux d'air externe F s'écoulant autour de la nacelle, comme on le comprend de la figure 12 illustrant l'ensemble propulsif 101 en vue isométrique de dessous.

On se réfère à la figure 13, illustrant la zone six heures de l'ensemble propulsif centrée sur le caisson d'assemblage 147. Le compartiment aval 165 comporte un espace interne 171 creux, permettant de faire passer des servitudes 173 du turboréacteur comme par exemple des cheminements de tubes, des harnais électriques ou encore des drains.

Le caisson d'assemblage 147 comporte un dispositif d'étanchéité (non représenté aux figures) assurant l'étanchéité avec les demi-poutres six heures (127a, 127b). Le dispositif d'étanchéité est conçu et agencé dans la nacelle pour garantir une ségrégation fluide, pression et feu entre chaque compartiment de l'ensemble propulsif par rapport à l'extérieur de l'ensemble propulsif.

## Revendications

1. Ensemble propulsif (101) pour aéronef, comprenant une nacelle (103) supportant un turboréacteur (105), ladite nacelle (103) comprenant :
- une section amont d'entrée d'air;
- une section médiane (109), dans le prolongement aval de ladite section amont, comprenant un capot de soufflante (110), l'espace annulaire compris entre le capot de soufflante (110) et un carter de soufflante (137) du turboréacteur (105) définissant une enveloppe annulaire (112) ;
- une section aval (111) à structure en D embarquant un dispositif d'inversion de poussée, ladite section aval (111) à structure en D comprenant des grilles de déviation mobiles entre une position rétractée selon laquelle les grilles sont logées dans ladite enveloppe annulaire (112) de la section médiane (109) et une position déployée selon laquelle lesdites grilles sont déplacées en aval de ladite enveloppe annulaire (112), ladite section aval (111) à structure en D comportant deux demi-structures (117a, 117b) en D comprenant chacune :
• un demi-capot externe (129a, 129b), mobile en translation lors de l'activation de moyens d'actionnement le long d'un axe sensiblement longitudinal de l'ensemble propulsif (101), entre une position rétractée assurant une continuité aérodynamique avec le capot de soufflante (110) et une veine annulaire, pour un fonctionnement de la nacelle (103) en jet direct et une position déployée ouvrant un passage annulaire dans la nacelle (103) pour un fonctionnement de la nacelle (103) en jet inversé ;
• un moyen de liaison entre les grilles de déviation et ledit demi-capot externe (129a, 129b), agencé de sorte que les grilles déviation se déplacent de concert avec ledit demi-capot externe (129a, 129b) lors de l'activation desdits moyens d'actionnement ;
• une demi-bifurcation six heures (123a, 123b) ;
• une demi-structure interne (119a, 119b) définissant une partie interne de la veine annulaire de la nacelle lorsque la nacelle (103) est en fonctionnement, ladite demi-structure interne étant reliée audit demi-capot externe (129a, 129b) par ladite demi-bifurcation six heures (123a, 123b) ;
• une demi-poutre six heures (127a, 127b) montée sur la demi-bifurcation six heures (123a, 123b), supportant un rail de coulissement (143a, 143b) en translation du demi-capot externe (129a, 129b) ;
• au moins deux rails de guidage six heures (145a, 145b) des grilles de déviation, fixés sur le carter de soufflante (137) du turboréacteur (105) ;
ledit ensemble propulsif (101) étant **caractérisé en ce qu'**il comporte un caisson d'assemblage (147), monté en porte-à-faux aval par rapport audit carter de soufflante (137) et directement fixé audit carter de soufflante (137), ledit caisson d'assemblage (147) comportant :
- au moins deux rails de guidage (153a, 153b) des grilles de déviation,
- un dispositif de verrouillage entre ledit caisson d'assemblage (147) et chaque demi-poutre six heures (127a, 127b) de chaque demi-structure (117a, 117b) en D,
ledit caisson d'assemblage (147) étant agencé dans l'ensemble propulsif (101) de sorte que les rails de guidage (153a, 153b) des grilles dudit caisson d'assemblage (147) sont situés dans le prolongement des rails de guidage six heures (145a, 145b) des grilles fixés sur le carter de soufflante (137), de façon à assurer une continuité entre les rails de guidage (153a, 153b) des grilles dudit caisson d'assemblage (147) et les rails de guidage six heures (145a, 145b) des grilles fixés sur le carter de soufflante (137).

2. Ensemble propulsif (101) selon la revendication 1, **caractérisé en ce que** le caisson d'assemblage (147) comporte une bride de fixation annulaire (149), montée en amont dudit caisson d'assemblage (147) et assurant la fixation au carter de soufflante (137).

3. Ensemble propulsif (101) selon l'une des revendications 1 ou 2, **caractérisé en ce que** le caisson d'assemblage (147) comporte un compartiment aval (165) en aval de la bride de fixation annulaire (149).

4. Ensemble propulsif (101) selon la revendication 3, **caractérisé en ce que** le compartiment aval (165) du caisson d'assemblage (147) comporte un espace interne (171) creux, pour le passage de servitudes (173) du turboréacteur (105).

5. Ensemble propulsif (101) selon l'une des revendications 3 ou 4, **caractérisé en ce que** le compartiment aval (165) du caisson d'assemblage (147) présente une forme sensiblement parallélépipédique.

6. Ensemble propulsif (101) selon l'une quelconque des revendications 3 à 5, **caractérisé en ce que** lesdits au moins deux rails de guidage (153a, 153b) des grilles du caisson d'assemblage (147) sont chacun intégrés à une paroi externe longitudinale (167a, 167b) du compartiment aval (165) du caisson d'assemblage (147).

7. Ensemble propulsif (101) selon l'une quelconque des revendications 1 à 6, **caractérisé en ce que** le caisson d'assemblage (147) comporte une paroi inférieure (169) assurant la continuité aérodynamique avec les deux demi-structures (117a, 117b) en D, ladite paroi inférieure (169) étant conçue pour venir en contact avec un flux d'air externe (F) s'écoulant autour de la nacelle (103).

8. Ensemble propulsif (101) selon l'une quelconque des revendications 1 à 7, **caractérisé en ce que** les deux demi-structures (117a, 117b) en D sont liées entre elles au niveau d'une zone de liaison située en aval du caisson d'assemblage (147).

9. Ensemble propulsif (101) selon l'une quelconque des revendications 1 à 8, **caractérisé en ce que** le dispositif de verrouillage entre ledit caisson d'assemblage (147) et chaque demi-poutre six heures (127a, 127b) de chaque demi-structure (117a, 117b) en D est positionné au niveau d'une portion amont (157) de ladite demi-poutre (127a, 127b).

10. Ensemble propulsif (101) selon l'une quelconque des revendications 3 à 9, **caractérisé en ce que** la longueur du compartiment aval (165) du caisson d'assemblage (147) est comprise 25% et 75% de la longueur de la demi-poutre six heures (127a, 127b) de la demi-structure (117a, 117b) en D.

11. Ensemble propulsif (101) selon l'une quelconque des revendications 1 à 10, **caractérisé en ce que** le caisson d'assemblage comporte un dispositif d'étanchéité assurant l'étanchéité avec les demi-poutres six heures (127a, 127b).

## Patentansprüche

1. Antriebseinheit (101) für ein Flugzeug, umfassend eine Gondel (103), die einen Turboreaktor (105) trägt, wobei die Gondel (103) umfasst:
- einen stromaufwärtigen Lufteinlassbereich;
- einen mittleren Bereich (109) in der stromabwärtigen Verlängerung des stromaufwärtigen Bereichs, umfassend eine Lüfterabdeckung (110), wobei der ringförmige Raum zwischen der Lüfterabdeckung (110) und einem Lüftergehäuse (137) des Turboreaktors (105) einen ringförmigen Mantel (112) definiert;
- einen stromabwärtigen Bereich (111) mit D-Struktur, der eine Schubumkehrvorrichtung aufnimmt, wobei der stromabwärtige Bereich (111) mit D-Struktur Ablenkungsgitter umfasst, die zwischen einer eingezogenen Position, in der die Gitter im ringförmigen Mantel (112) des mittleren Bereichs (109) untergebracht sind, und einer entfalteten Position, in der die Gitter dem ringförmigen Mantel (112) nachgelagert verlagert sind, beweglich sind, wobei der stromabwärtige Bereich (111) mit D-Struktur zwei halbe D-Strukturen (117a, 117b) aufweist, die jeweils umfassen:
• eine äußere halbe Abdeckung (129a, 129b), die bei der Aktivierung von Betätigungsmitteln entlang einer etwa längsverlaufenden Achse der Antriebseinheit (101) zwischen einer eingezogenen Position, die eine aerodynamische Kontinuität mit der Lüfterabdeckung (110) und einen ringförmigen Kanal für einen Betrieb der Gondel (103) im Direktstrahl sichert, und einer entfalteten Position, die einen ringförmigen Durchgang in der Gondel (103) für einen Betrieb der Gondel (103) im Umkehrstrahl öffnet, translatorisch beweglich ist;
• ein Verbindungsmittel zwischen den Ablenkungsgittern und der äußeren halben Abdeckung (129a, 129b), das derart eingerichtet ist, dass sich die Ablenkgitter gemeinsam mit der äußeren halben Abdeckung (129a, 129b) bei der Aktivierung der Betätigungsmittel verlagern;
• eine halbe Gabelung in Sechs-Uhr-Stellung (123a, 123b);
• eine innere halbe Struktur (119a, 119b), die einen inneren Teil des ringförmigen Kanals der Gondel definiert, wenn die Gondel (103) im Betrieb ist, wobei die innere halbe Struktur mit der äußeren halben Abdeckung (129a, 129b) durch die halbe Gabelung in Sechs-Uhr-Stellung (123a, 123b) verbunden ist;
• ein halber Balken in Sechs-Uhr-Stellung (127a, 127b), der auf der halben Gabelung in Sechs-Uhr-Stellung (123a, 123b) angebracht ist, der eine Schiene (143a, 143b) für das translatorische Gleiten der äußeren halben Abdeckung (129a, 129b) trägt;
• mindestens zwei Führungsschienen in Sechs-Uhr-Stellung (145a, 145b) der Ablenkungsgitter, die auf dem Lüftergehäuse (137) des Turboreaktors (105) befestigt sind;
wobei die Antriebseinheit (101) **dadurch gekennzeichnet ist, dass** sie einen Montagekasten (147) aufweist, der nachgelagert überhängend im Verhältnis zum Lüftergehäuse (137) angebracht und direkt auf dem Lüftergehäuse (137) befestigt ist, wobei der Montagekasten (147):
- mindestens zwei Führungsschienen (153a, 153b) der Ablenkungsgitter,
- eine Verriegelungsvorrichtung zwischen dem Montagekasten (147) und jedem halben Balken in Sechs-Uhr-Stellung (127a, 127b) jeder halben D-Struktur (117a, 117b),
aufweist,
wobei der Montagekasten (147) in der Antriebseinheit (101) derart eingerichtet ist, dass sich die Führungsschienen (153a, 153b) der Gitter des Montagekastens (147) in der Verlängerung der Führungsschienen in Sechs-Uhr-Stellung (145a, 145b) der Gitter befinden, die auf dem Lüftergehäuse (137) befestigt sind, so dass eine Kontinuität zwischen den Führungsschienen (153a, 153b) der Gitter des Montagekastens (147) und den Führungsschienen in Sechs-Uhr-Stellung (145a, 145b) der Gitter, die auf dem Lüftergehäuse (137) befestigt sind, sichergestellt ist.

2. Antriebseinheit (101) nach Anspruch 1, **dadurch gekennzeichnet, dass** der Montagekasten (147) einen ringförmigen Befestigungsflansch (149) aufweist, der dem Montagekasten (147) vorgelagert angebracht und die Befestigung am Lüftergehäuse (137) sicherstellt.

3. Antriebseinheit (101) nach einem der Ansprüche 1 oder 2, **dadurch gekennzeichnet, dass** der Montagekasten (147) ein stromabwärtiges Fach (165) aufweist, das dem ringförmigen Befestigungsflansch (149) nachgelagert ist.

4. Antriebseinheit (101) nach Anspruch 3, **dadurch gekennzeichnet, dass** das stromabwärtige Fach (165) des Montagekastens (147) einen hohlen Innenraum (171) für den Durchgang von Versorgungen (173) des Turboreaktors (105) aufweist.

5. Antriebseinheit (101) nach einem der Ansprüche 3 oder 4, **dadurch gekennzeichnet, dass** das stromabwärtige Fach (165) des Montagekastens (147) eine etwa parallelepipedische Form aufweist.

6. Antriebseinheit (101) nach einem der Ansprüche 3 bis 5, **dadurch gekennzeichnet, dass** die mindestens zwei Führungsschienen (153a, 153b) der Gitter des Montagekastens (147) beide in eine äußere längsverlaufende Außenwand (167a, 167b) des stromabwärtiges Fachs (165) des Montagekastens (147) integriert sind.

7. Antriebseinheit (101) nach einem der Ansprüche 1 bis 6, **dadurch gekennzeichnet, dass** der Montagekasten (147) eine untere Wand (169) aufweist, die die aerodynamische Kontinuität mit den zwei halben D-Strukturen (117a, 117b) sicherstellt, wobei die untere Wand (169) ausgebildet ist, um mit einem äußeren Luftstrom (F) in Kontakt zu kommen, der um die Gondel (103) strömt.

8. Antriebseinheit (101) nach einem der Ansprüche 1 bis 7, **dadurch gekennzeichnet, dass** die zwei halben D-Strukturen (117a, 117b) im Bereich einer Verbindungszone miteinander verbunden sind, die sich dem Montagekasten (147) nachgelagert befindet.

9. Antriebseinheit (101) nach einem der Ansprüche 1 bis 8, **dadurch gekennzeichnet, dass** die Verriegelungsvorrichtung zwischen dem Montagekasten (147) und jedem halben Balken in Sechs-Uhr-Stellung (127a, 127b) jeder halben D-Struktur (117a, 117b) im Bereich eines stromaufwärtigen Abschnitts (157) des halben Balkens (127a, 127b) positioniert ist.

10. Antriebseinheit (101) nach einem der Ansprüche 3 bis 9, **dadurch gekennzeichnet, dass** die Länge des stromabwärtigen Fachs (165) des Montagekastens (147) 25 % und 75 % der Länge des halben Balkens in Sechs-Uhr-Stellung (127a, 127b) der halben D-Struktur (117a, 117b) liegt.

11. Antriebseinheit (101) nach einem der Ansprüche 1 bis 10, **dadurch gekennzeichnet, dass** der Montagekasten eine Dichtungsvorrichtung aufweist, die die Dichtigkeit mit den halben Balken in Sechs-Uhr-Stellung (127a, 127b) sicherstellt.

## Claims

1. A propulsion unit for aircraft, comprising a nacelle (103) supporting a turbojet engine, said nacelle comprising:
- an upstream air inlet section;
- a median section, in a downstream extension of said upstream section, comprising a fan cowl, an annular space comprised between the fan cowl and a fan casing of the turbojet engine defining an annular envelope;
- a D-shaped structure downstream section embedding a thrust reverser device, said D-shaped structure downstream section comprising cascades vane movable between a retracted position wherein the cascades vane are housed in said annular envelope of the median section and a deployed position wherein said cascades vane are displaced downstream of said annular envelope, said D-shaped structure downstream section comprising two D-shaped half-structures, each comprising:
• an outer half-cowl, movable in translation during the activation of an actuator along a substantially longitudinal axis of the propulsion unit, between a retracted position ensuring aerodynamic continuity with the fan cowl and an annular flow path, for an operation of the nacelle in direct jet and a deployed position opening an annular passage in the nacelle for an operation of the nacelle in reverse jet;
• a connector between the cascades vane and said outer half-cowl, arranged so that the cascades vane are displaced simultaneously with said outer half-cowl during the activation of said actuator;
• a six o'clock half-bifurcation;
• an inner half-structure defining an inner portion of the annular flow path of the nacelle when the nacelle is in operation, said inner half-structure being connected to said outer half-cowl by said six o'clock half-bifurcation;
• a six o'clock half-beam mounted on the six o'clock half-bifurcation, supporting a sliding rail in translation of the outer half-cowl;
• at least two six o'clock guiding rails for guiding the cascades vane, fixed to the fan casing of the turbojet engine;
wherein said propulsion unit includes an assembly box, cantilever mounted downstream relative to said fan casing and directly fixed to said fan casing , said assembly box comprising:
- at least two guiding rails for guiding the cascades vane,
- a locking device between said assembly box and each six o'clock half-beam of each D-shaped half-structure,
said assembly box being arranged in the propulsion unit so that the at least two guiding rails for guiding the cascades vane of said assembly box are located in the extension of the six o'clock guiding rails for guiding the cascades vane fixed on the fan casing, so as to ensure continuity between the at least two guiding rails for guiding the cascades vane of said assembly box and the six o'clock guiding rails for guiding the cascades vane fixed to the fan casing.

2. The propulsion unit according to claim 1, wherein the assembly box includes an annular fixing flange, mounted upstream of said assembly box and ensuring fixing to the fan casing.

3. The propulsion unit according to claim 1, wherein the assembly box includes a downstream compartment downstream of the annular fixing flange.

4. The propulsion unit according to claim 3, wherein the downstream compartment of the assembly box includes a hollow inner space, for the passage of ancillaries of the turbojet engine.

5. The propulsion unit according to claim 3, wherein the downstream compartment of the assembly box has a substantially parallelepiped shape.

6. The propulsion unit according to claim 3, wherein said at least two guiding rails for guiding the cascades vane of the assembly box are each integrated into a longitudinal outer wall of the downstream compartment of the assembly box.

7. The propulsion unit according to claim 1, wherein the assembly box includes a lower wall ensuring aerodynamic continuity with the two D-shaped half-structures, said lower wall being configured to come into contact with an outer air flow flowing around the nacelle.

8. The propulsion unit according to claim 1, wherein the two D-shaped half structures are connected together at a connection zone located downstream of the assembly box.

9. The propulsion unit according to claim 1, wherein the locking device between said assembly box and each six o'clock half-beam of each D-shaped half-structure is positioned at an upstream portion of said six o'clock half-beam.

10. The propulsion unit according to claim 3, wherein a length of the downstream compartment of the assembly box is comprised between 25% and 75% of a length of the six o'clock half-beam of the D-shaped half-structure.

11. The propulsion unit according to claim 1, wherein the assembly box includes a sealing device ensuring the seal with the six o'clock half-beams.
